# EUROPÄISCHE PATENTSCHRIFT

(11) **EP 2 922 491 B1**
(45) Veröffentlichungstag und Bekanntmachung des Hinweises auf die Patenterteilung: **08.08.2018**
(21) Anmeldenummer: 13810900.4
(22) Anmeldetag: 19.11.2013
(51) Int. Cl.: A61C 9/00

(54) **VERFAHREN ZUR PLANUNG EINER DENTALEN BEHANDLUNG**
METHOD FOR PLANNING A DENTAL TREATMENT
PROCÉDÉ DE PLANIFICATION D'UN TRAITEMENT DENTAIRE

(30) Priorität: 22.11.2012 DE 102012221374
(43) Veröffentlichungstag der Anmeldung: 30.09.2015
(73) Patentinhaber: Sirona Dental Systems GmbH, 64625 Bensheim (DE)
(72) Erfinder: LINDENBERG, Kai, 64395 Wersau (DE); ABKAI, Ciamak, 68542 Heddesheim (DE)
(74) Vertreter: Sommer, Peter
(86) Internationale Anmeldenummer: PCT/EP2013/074139
(87) Internationale Veröffentlichungsnummer: WO 2014/079830

(56) Entgegenhaltungen:
- WO-A1-2009/145391
- US-A- 6 068 482
- US-A1- 2003 169 913
- US-A1- 2004 029 068

## Beschreibung

### Technisches Gebiet

Die Erfindung betrifft ein Verfahren zur Planung einer dentalen Behandlung, wobei mittels mindestens einer Videokamera eine Videoaufnahme von einem zu behandelnden Objekt aufgenommen wird.

### Stand der Technik

Aus dem Stand der Technik sind mehrere Verfahren zur Planung von dentalen Behandlungen bekannt.

Bei einem ersten bekannten Verfahren erfolgt die Planung unmittelbar am Patienten, wobei der behandelnde Arzt die Zahnsituation des Patienten auf erkrankte Bereiche hin untersucht und anschließend mögliche Behandlungen sowie Kommentare zu den einzelnen Zahnbereichen notiert. Bei einzusetzenden Zahnersatzteilen oder Implantaten wird meist anschließend an einem Modell der Zahnsituation eine genaue Planung der Abmessungen, Ausrichtungen sowie Positionen der Zahnersatzteile oder Implantate durchgeführt.

Alternativ dazu kann die Planung der einzusetzenden Zahnersatzteile oder Implantate auch anhand von dreidimensionalen Röntgendaten erfolgen, die mit optischen dreidimensionalen Oberflächendaten der Zahnsituation überlagert sein können. Dadurch kann die Planung rein virtuell erfolgen, ohne ein reales Abdruckmodell der Zahnsituation anfertigen zu müssen.

US 2004/0197727 A1 offenbart ein Verfahren und eine Arbeitsstation zur Planung einer orthodontischen Behandlung eines Patienten. Die Arbeitsstation weist dabei einen Computer und eine graphische Benutzeroberfläche auf, wobei 3D-bilddaten des Patienten mittels der graphischen Benutzeroberfläche angezeigt werden. Dabei kann auch das Einsetzen von Zahnersatzteilen sowie andere zahnärztliche Behandlungen simuliert werden. Zur Erzeugung eines virtuellen Patientenmodells können mehrere Arten von 3D-Bilddaten, wie optische Intraoralaufnahmen, Röntgendaten, CT-Aufnahmen, intraorale farbliche Fotografien der Zähne und auch virtuelle 3D-Zahnmodelle, in Überlagerung gebracht werden. Das virtuelle Patientenmodell kann damit nicht nur Gesichtsoberflächen des Patienten sondern auch interne Strukturen, wie Zahnwurzeln, Kieferknochen, darstellen. Zum Betrachten dieses virtuellen Patientenmodells können herkömmliche CAD-Softwarewerkzeuge verwendet werden. Dabei kann das virtuelle Patientenmodell aus jeder Richtung betrachtet werden oder auch nur Schnittansichten in definierten Ebenen angezeigt werden. Zum Ausrichten der einzelnen 3D-Datensätze zueinander können charakteristische übereinstimmende Punkte, beispielsweise auf der 3D-Röntgenaufnahme des Kiefers und in der dreidimensionalen optischen Aufnahme der Gesichtsoberflächen, verwendet werden, um eine Transformationsmatrix zu berechnen.

Ein Nachteil der genannten Verfahren besteht darin, dass die Planung aufwendig in mehreren Schritten erfolgt, wobei zunächst Volumendatensätze der Zahnsituation, wie dreidimensionale Röntgendaten und/oder optische Oberflächendaten, erzeugt werden und erst anschließend die Planung mittels einer Planungssoftware anhand dieser Volumendatensätze erfolgt. Das Dokument US2004/0029068 offenbart auch ein Verfahren zur Planung oder Überprüfung der Planung einer dentalen Behandlung.

Die Aufgabe der vorliegenden Erfindung besteht daher darin, ein Verfahren zur Planung einer dentalen Behandlung bereitzustellen, das eine einfache, schnelle und bessere Planung ermöglicht.

### Darstellung der Erfindung

Die Erfindung betrifft ein Verfahren zur Planung oder zur Überprüfung der Planung einer dentalen und/oder einer maxillofazialen Behandlung, wobei mittels mindestens einer Videokamera eine Videoaufnahme von einem Objekt, wie vom Kopf eines zu behandelnden Patienten, aufgenommen wird. Dabei ist ein Patientenmodell vorhanden, das Bilddaten des Objekts umfasst. Die Videoaufnahme wird virtuell an das Patientenmodell so gekoppelt, dass beim Bewegen der Videokamera relativ zum Objekt eine Blickrichtung der Ansicht auf das Patientenmodell abhängig von einer sich ändernden Aufnahmerichtung der Videoaufnahme verändert wird. Ein darzustellender Ausschnitt des Patientenmodells wird dabei durch einen Abstand der Videokamera relativ zum Objekt und durch eine Aufnahmerichtung der Videokamera relativ zum Objekt definiert.

Die zu planende dentale Behandlung kann beispielsweise die Analyse der Zahnsituation auf erkrankte Bereiche und die Bestimmung möglicher Therapien umfassen. Die Therapiemöglichkeiten können beispielsweise durchzuführende Präparationen, auf Präparationen aufzusetzende Zahnersatzteile oder einzusetzende Implantate sein. Die Videoaufnahme kann beispielsweise mit einer Bildwiderholungsrate von 50 Hz aufgenommen werden. Das aufzunehmende Objekt kann beispielsweise ein Unterkiefer, ein Oberkiefer, eine Gruppe von Zähnen und/oder der gesamte Kopf eines Patienten sein. Das aufzunehmende Objekt kann jedoch auch alternativ ein Abdruckmodell der Zahnsituation sein, an dem die Planung durchgeführt wird. Das bereits vorhandene Patientenmodell umfasst aufgenommene Bilddaten, wie dreidimensionale optische Bilddaten, dreidimensionale Röntgendaten und/oder MRT-Bilddaten. Die Videoaufnahme des Objekts wird an das vorhandene Patientenmodell gekoppelt, so dass die virtuelle Blickrichtung der Ansicht auf das Patientenmodell der Aufnahmerichtung der Videokamera folgt. Die Blickrichtung der Darstellung des Patientenmodells stimmt mit der Aufnahmerichtung der Videokamera überein. Das Patientenmodell kann zusätzlich zu dem Bilddaten auch weitere Informationen zu der Zahnsituation, wie die Knochendichte des Kieferknochen, umfassen, um beispielsweise eine mechanische Belastungssimulation bei einer Implantatplanung durchzuführen.

Dadurch kann der behandelnde Zahnarzt also die Videokamera auf eine bestimmte Region des Kopfes richten, wobei das Patientenmodell beispielsweise mittels eines Monitors aus der entsprechenden Blickrichtung dargestellt wird. Dies erleichtert dem Zahnarzt erheblich die Orientierung und die Planung der dentalen Behandlung. Der Zahnarzt kann mit der Videokamera auch näher an einen bestimmten Bereich herangehen, wobei lediglich der entsprechende Ausschnitt aus den dreidimensionalen Röntgenbilddaten des Patientenmodells dargestellt wird.

Vorteilhafterweise kann das Patientenmodell dreidimensionale optische Oberflächendaten, dreidimensionale Röntgendaten, virtuelle Planungsdaten und/oder MRT-Bilddaten zumindest eines Teils des Objekts umfassen.

Die dreidimensionalen optischen Oberflächendaten können beispielsweise durch ein Streifenprojektionsverfahren erzeugt werden. Die dreidimensionalen Röntgendaten können beispielsweise durch ein DVT-Messverfahren oder ein Computertomographieverfahren (CT) erzeugt werden. Die Bilddaten des Patientenmodells können auch nur einen Teil des Objekts umfassen. Falls das Objekt der gesamte Kopf des Patienten ist, können die Röntgendaten beispielsweise nur den Oberkiefer oder den Unterkiefer enthalten. Das Patientenmodell kann auch Röntgendaten einer zweidimensionalen cephalometrischen Röntgenaufnahme oder einer Panoramaaufnahme enthalten. Die virtuellen Planungsdaten können beispielsweise Planungselemente, wie virtuelle Markierungen, Kommentare, einfache Zeichnungen oder Modelle von einzusetzenden Zahnersatzteilen und/oder Implantaten, umfassen, die eine feste Lagebeziehung zu der umgebenden Zahnsituation, bestehend aus Zähnen und Zahnfleisch, aufweisen.

Vorteilhafterweise kann die Videoaufnahme in Überlagerung mit dem Patientenmodell mittels mindestens einer Anzeigevorrichtung, wie eines Monitors, angezeigt werden.

Die Videoaufnahme kann beispielsweise halbtransparent dargestellt werden, wobei das Patientenmodell eingeblendet wird. Dies ermöglicht dem behandelnden Zahnarzt eine einfachere Orientierung relativ zum Patienten. Alternativ dazu kann das Patientenmodell allein mittels des Monitors angezeigt werden, wobei die Videoaufnahme lediglich zur Bestimmung der Aufnahmerichtung verwendet wird.

Alternativ kann die Anzeigevorrichtung eine virtuelle Monitor-Brille sein, wobei das Navigieren relativ zum Patientenmodell in der virtuellen Realität durch die Bewegung der Monitor-Brille relativ zum Patienten erfolgt.

Als Anzeigevorrichtung können auch andere anzeigende oder einblendende(engl.: augmented reality) Virtual-Reality-Anzeigevorrichtungen verwendet werden.

Bei einer weiteren Alternative kann die Anzeigevorrichtung ein sogenannter Tablet-Computer oder ein portabler PDA-Computer (Personal Digital Assistant) sein, wobei die Videoaufnahme mittels der Videokamera erzeugt wird, die in den Tablet-Computer oder in den portablen PDA-Computer integriert ist. Das Patentmodell wird dann abhängig von der Bewegung des Tablet-Computers oder des portablen PDA-Computers aus der entsprechenden Blickrichtung mittels des Monitors des Tablet-Computers oder des portablen PDA-Computers angezeigt.

Vorteilhafterweise kann die virtuelle Kopplung der Videoaufnahme an das Patientenmodell unter Verwendung von Mustererkennungsalgorithmen erfolgen. Dabei können Markierungen, die am Objekt angebracht werden, oder charakteristische Strukturen des Objekts, wie Augen, Nase, Mund oder Zähne des Patienten, sowohl in der Videoaufnahme als auch im Patientenmodell erkannt werden, um eine Zuordnung zwischen der Videoaufnahme und dem Patientenmodell herzustellen.

Bei der Verwendung von Mustererkennungsalgorithmen werden übereinstimmende Bereiche in der Videoaufnahme und im Patientenmodell ermittelt und zur Bestimmung der Orientierung der Videoaufnahme und des Patientenmodells zueinander verwendet. Die übereinstimmenden Bereiche können beispielsweise charakteristische Formverläufe, wie das Kinn des Patienten oder die beiden Winkel des Kieferknochens sein.

Alternativ dazu können Markierungen direkt am Objekt angebracht werden, beispielsweise können optische Markierungen direkt auf der Haut im Wangenbereich des Patienten angebracht werden. Diese Markierungen werden dann sowohl in der Videoaufnahme als auch im Patientenmodell erkannt und zur Ermittlung der Orientierung der Videoaufnahme relativ zum Patientenmodell und zur Ermittlung der Aufnahmerichtung der Videokamera relativ zum Objekt verwendet. Die Erkennung der Markierungen kann vollautomatisch mittels eines Computeralgorithmus erfolgen, der die Videoaufnahme auf ein bestimmtes Muster der Markierungen absucht. Die Kopplung der Videoaufnahme an das Patientenmodell kann auch vor der Durchführung der Planung bei einer Erstregistrierung durchgeführt werden, wobei die Aufnahmen der Markierungen in der Videoaufnahme manuell den Aufnahmen der Markierungen im Patientenmodell zugeordnet werden können.

Die Kopplung zwischen der Videoaufnahme und dem Patientenmodell kann auch manuell durch einen Benutzer erfolgen, wobei übereinstimmende Punkte in der Videoaufnahme und in Patientenmodell definiert werden.

Vorteilhafterweise kann die Bestimmung der sich ändernden Aufnahmerichtung der Videokamera relativ zum Objekt automatisch computergestützt durch Verfolgung der am Objekt angebrachten Markierungen oder von charakteristischen Strukturen des Objekts, wie Augen, Nase, Mund oder Zähne des Patienten, erfolgen.

Die Bestimmung der sich ändernden Aufnahmerichtung der Videokamera erfolgt also durch ein Trackingverfahren, bei dem die Position der Markierungen oder der charakteristischen Strukturen in der Videoaufnahme verfolgt wird. Abhängig von der sich ändernden Aufnahmerichtung wird dann die entsprechende Blickrichtung auf das Patientenmodell berechnet und der entsprechende Ausschnitt des Patientenmodells aus der berechnenden Blickrichtung mittels eines Monitors dargestellt.

Vorteilhafterweise kann die Planung unmittelbar während der Videoaufnahme erfolgen, wobei Planungselemente in Überlagerung mit dem Patientenmodell mittels einer Anzeigevorrichtung angezeigt werden und dabei durch den Benutzer deren Position relativ zum Patientenmodell festgelegt wird.

Dadurch kann der behandelnde Zahnarzt dem Patientenmodell Planungselemente, wie Markierungen, Kommentare, Zeichnungen oder Modelle von Zahnersatzteilen bzw. Implantaten, hinzufügen und deren Position in der Zahnsituation festlegen. Dies erfolgt simultan zur Videoaufnahme unmittelbar am Patienten, so dass dadurch die Behandlungszeit verkürzt wird und mögliche Fehler auch während der Planung vermieden werden.

Vorteilhafterweise können die Planungselemente Markierungen, Kommentare, einfache Zeichnungen oder Modelle von einzusetzenden Zahnersatzteilen bzw. Implantaten sein, deren Position relativ zum Patientenmodell festgelegt wird.

Der behandelnde Zahnarzt kann beispielsweise Markierungen an bestimmten zu behandelnden Bereichen der Zahnsituation hinzufügen und diese mit Kommentaren versehen, die eine Diagnose enthalten. Die Markierungen können einfache Freihandstriche oder vorgefertigte Symbole sein, die von einer Software bereitgestellt werden. Die Kommentare können Freitexte sein, die mittels einer Tastatur an einer mittels einer Maus definierten Position angegeben werden. Dadurch werden die Positionen der Planungselemente relativ zum Patientenmodell festgelegt, so dass die Planungselemente zusammen mit dem Patientenmodell mitgedreht werden, wenn sich die Blickrichtung auf das Patientenmodell ändert.

Vorteilhafterweise können die Planungselemente direkt auf das zu behandelnde Objekt mittels eines Projektors projiziert werden.

Der Projektor kann ein herkömmlicher optischer Projektor sein, der die Planungselemente direkt auf die Hautoberfläche oder die Zähne des Patienten projiziert. Dadurch kann die Planung unmittelbar am Patienten erfolgen, so dass keine Anzeigevorrichtung zum Darstellen der Planungselemente notwendig ist.

Vorteilhafterweise kann die Planung mittels eines Markers erfolgen, wobei ein optischer Zeiger auf den Patienten projiziert wird, der während der Videoaufnahme mittels der Videokamera erfasst wird.

Der optische Zeiger dient als ein virtuelles Werkzeug zum Auswählen und zum Verschieben der Planungselemente innerhalb des auf den Patienten projizierten Patientenmodells. Dadurch können die einzelnen Planungselemente, wie Kommentare oder Markierungen, mittels des optischen Markers hinzugefügt und verschoben werden. Dabei wird die Position der Planungselemente relativ zum Patientenmodell festgelegt.

Vorteilhafterweise kann der optische Marker ein Laserpointer sein, der einen Laserpunkt auf das Objekt projiziert.

Durch den Laserpointer als optischen Marker kann der behandelnde Zahnarzt die Planung auch aus einer größeren Distanz durchführen. Der Laserpunkt ist farblich so gestaltet, dass er in der Videoaufnahme eindeutig erkannt werden kann.

Vorteilhafterweise kann die Planung mittels eines optisch erkennbaren Markers erfolgen, der während der Videoaufnahme mittels der Videokamera erfasst wird.

Dadurch kann der behandelnde Zahnarzt mittels des Markers, wie eines Stiftes, navigieren und bestimmte Bereiche des Patientenmodells auswählen.

Vorteilhafterweise kann der optisch erkennbare Marker ein Stift mit einer farblichen Spitze, ein Finger oder ein zahnärztliches Instrument sein.

Vorteilhafterweise können die auf das Objekt projizierten Planungselemente mittels des Markers ausgewählt und verschoben werden, um deren Position relativ zum Patientenmodell festzulegen.

Dadurch kann der behandelnde Zahnarzt mittels des Markers die einzelnen Planungselemente, wie Markierungen, Kommentare, Zeichnungen oder Modelle von einzusetzenden Zahnersatzteilen bzw. Implantaten, auswählen und relativ zum Patientenmodell verschieben, um deren Position festzulegen.

Vorteilhafterweise kann die Auswahl eines der Planungselemente dadurch erfolgen, dass der Benutzer einen Schalter am Marker betätigt und dadurch eine bestimmte Struktur auf die Oberfläche des zu behandelnden Objekt projiziert wird, wobei diese Struktur in der Videoaufnahme erkennbar ist.

Der Schalter am Marker kann beliebig ausgestaltet sein und beispielsweise als eine Taste ausgeführt sein. Beim Betätigen dieses Schalters wird die Struktur auf das Objekt projiziert, das beispielsweise als ein bestimmtes eingeblendetes Muster, eine Farbänderung der optischen Markierung, eine Formänderung der optischen Markierung oder als ein Blindcode ausgeführt sein kann. Auf das Drücken der Taste hin wird eine Aktion, wie beispielsweise die Auswahl eines bestimmten Planungselementes, ausgelöst. Solange die Taste gedrückt bleibt, kann dann das betreffende Planungselement verschoben werden. Beim Loslassen der Taste wird dann das Planungselement von der optischen Markierung losgelöst und dadurch die Position dieses Planungselements relativ zum Patientenmodell festgelegt.

Vorteilhafterweise können zur Erleichterung der Planung die Bilddaten und/oder die virtuellen Planungsdaten des Patientenmodells mittels eines Projektors auf das zu behandelnde Objekt projiziert werden.

Alternativ zur Darstellung des Patientenmodells mittels eines Monitors kann das Patientenmodell mittels des Projektors auf die Hautoberfläche des Patienten projiziert werden. Dadurch können beispielsweise Röntgenaufnahmen einer Kieferknochenstruktur auf den betreffenden Bereich der Hautoberfläche projiziert werden, um die Orientierung für den behandelnden Zahnarzt zu erleichtern.

### Kurzbeschreibung der Zeichnungen

Die Erfindung wird anhand der Zeichnungen erläutert. Es zeigt, die
- Fig. 1: eine Skizze zur Verdeutlichung des Verfahrens zur Planung einer dentalen Behandlung; die
- Fig. 2: eine Skizze zur Verdeutlichung der Videoaufnahme aus verschiedenen Aufnahmerichtungen.

### Ausführungsbeispiel

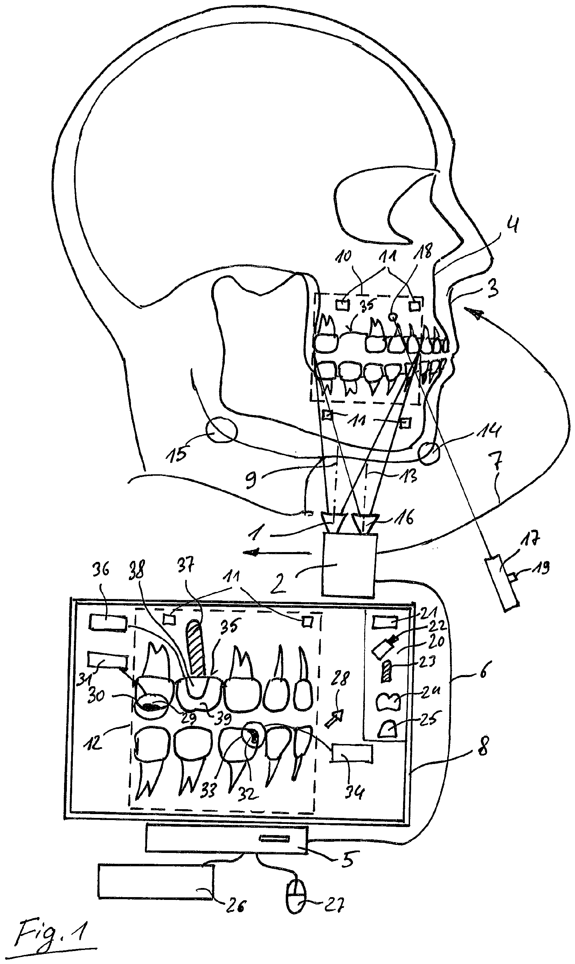

Die Fig. 1 zeigt eine Skizze zur Verdeutlichung des Verfahrens zur Planung einer dentalen Behandlung. Mittels einer Videokamera 1, die an einem Handstück 2 angeordnet ist, wird eine Videoaufnahme von einem zu behandelnden Objekt 3 aufgenommen. Das Objekt 3 ist in diesem Fall der Kopf eines Patienten. Die Videoaufnahme nimmt also die Hautoberfläche im Wangenbereich des Kopfes 3 auf. Ein bereits vorhandenes Patientenmodell 4 umfasst bereits aufgenommene Bilddaten des Objekts 3, wie beispielsweise im vorliegenden Fall dargestellt, dreidimensionale Röntgendaten des Objekts 3. Das Patientenmodell 4 kann auch weitere Bilddaten, wie dreidimensionale optische Bilddaten und/oder MRT-Bilddaten des Objekts 3, aufweisen. Die Bilddaten des Patientenmodells sind in einem Bildspeicher eines Computers 5 abgespeichert. Die Bilddaten der Videoaufnahme werden von der Videokamera 1 an den Computer 5 über eine Kabelverbindung 6 übermittelt. Die Bilddaten der Videokamera 1 können auch drahtlos an einen Computer 5 übermittelt werden. Die Videoaufnahme des Objekts 3 ist an das Patientenmodell 4 virtuell so gekoppelt, dass beim Bewegen der Videokamera 1 um das Objekt 3 entlang einer Bewegungsbahn 7 die Darstellung des Patientenmodells 4 mittels eines Monitors 8 an eine sich ändernde Aufnahmerichtung 9 der Videokamera 1 angepasst wird. Die Videokamera 1 nimmt einen ersten Ausschnitt 10 der Hautoberfläche des Objekts 3 auf. Bei der Auswertung der Bilddaten der Videoaufnahme mittels des Computers 5 können Markierungen 11, die am Objekt 3 angebracht sind, erkannt werden. Anhand der Positionierung der Markierungen 11 wird dann die genaue Lage des Objekts 3 relativ zur Videokamera 1 berechnet. Anschließend wird ein zweiter Ausschnitt 12 des Patientenmodells 4 mittels des Monitors 8 dargestellt, der in seinen Abmessungen dem ersten Ausschnitt 10 aus der Videoaufnahme entspricht. Dadurch kann der behandelnde Zahnarzt die Videokamera 1 beliebig um den Patienten 3 bewegen und auf die relevanten Bereiche richten. Der Monitor 8 zeigt daraufhin automatisch den entsprechenden Ausschnitt 12 der entsprechenden Patientendaten, wie der Röntgendaten, aus einer Blickrichtung, die beispielsweise der Aufnahmerichtung der Videokamera entspricht. Vor der Planung kann eine Erstregistrierung durchgeführt werden, bei der die Aufnahmen der Markierungen 11 in der Videoaufnahme den entsprechenden Aufnahmen der Markierungen 11 im Patientenmodell 4, wie im vorliegenden Fall in den Röntgendaten, zugeordnet werden. Dabei müssen die Markierungen 11 neben der optischen Erkennbarkeit auch röntgensensitiv sein.

Die Registrierung beziehungsweise das Matching zwischen der Videoaufnahme und den Patientenmodell 4 kann alternativ auch objektbasiert ohne Markierungen erfolgen. Dabei wird die Registrierung durch die Zuordnung bzw. Überlagerung charakteristischer anatomischer Strukturen, wie der Augen, der Nase und/oder des Mundes des Patienten, in der Videoaufnahme und im Patientenmodell 4 durchgeführt.

Diese Zuordnung kann manuell durch einen Benutzer oder automatisch durch Mustererkennungsalgorithmen erfolgen. Nach der Erstregistrierung wird die Position der Markierungen 11 in der Videoaufnahme mittels eines Trackingverfahrens mitverfolgt, so dass die Blickrichtung 13 auf das Patientenmodell automatisch abhängig von der Aufnahmerichtung 9 mitbewegt wird.

Die Mitverfolgung der Aufnahmerichtung relativ zum Objekt 3 kann auch ohne Markierungen 11 unter Verwendung markanter Bereiche des Objekts 3, wie des Kinns 14 und/oder der Kieferknochenwinkel 15 erfolgen. Diese charakteristischen Bereiche des Objekts 3 können mittels eines Mustererkennungsalgorithmus computergestützt in der Videoaufnahme erkannt werden. Alternativ zur Darstellung des Patientenmodells 4 mittels des Monitors 8 kann zumindest ein Teil des Patientenmodells mittels eines Projektors 16, der in das Handstück 2 integriert sein kann, auf die Hautoberfläche des Objekts 3 projiziert werden. Dies erleichtert dem behandelnden Zahnarzt die Planung der dentalen Behandlung, da direkt auf der Hautoberfläche die Röntgendaten des Patientenmodells 4 angezeigt werden. Die Planung kann dann mittels eines optischen Markers 17, wie eines Laserpointers, unmittelbar auf der Hautoberfläche des Patienten durchgeführt werden. Der Laserpointer 17 projiziert einen Laserpunkt 18, der als Cursor dient, auf die Hautoberfläche. Beim Betätigen einer Taste 19 am Laserpointer 17 wird ein bestimmte Struktur, wie ein Muster oder ein Blinkcode, auf die Hautoberfläche projiziert. Dadurch kann beim Betätigen der Taste 19 ein bestimmtes Planungselement 20, wie ein Kommentar 21, eine Markierung 22, ein Modell eines Implantats 23, ein Modell eines Zahnersatzteils 24 oder ein Modell eines Abutments 25 ausgewählt werden und in das dargestellte Patientenmodell 4 eingefügt werden. Solange die Taste 19 gedrückt bleibt, kann das ausgewählte Planungselement 20 verschoben und an einer bestimmten Position relativ zum Patientenmodell 4 positioniert werden. Beim Loslassen der Taste 19 wird dann das jeweilige Planungselement 20 vom Laserpunkt 18 losgelöst und dadurch die Position des Planungselements 20 definiert.

Alternativ dazu können die Auswahl und das Einfügen der Planungselemente 20 in das Patientenmodell 4 unter Verwendung von Eingabemitteln, wie einer Tastatur 26 und einer Maus 27, am Monitor 8 über einen Cursor 28 erfolgen. Während der Planung kann beispielsweise ein erster Befund 29 eines mit Karies befallenen Zahns mit einer Markierung 30 mittels des Markierungswerkzeugs 22 und mit einem Kommentar 31 in Textform versehen werden. Der Kommentar 31 kann mittels der Tastatur 26 durch den Benutzer eingegeben werden und beispielsweise Informationen zum Befund und zur Position des betreffenden Zahns enthalten. Ein zweiter Befund 32 eines seitlich befallenen Zahns kann entsprechend mit einer Markierung 23 und einem Kommentar 34 versehen werden. Im letzten Schritt der Planung kann ein Bereich 35 mit dem fehlenden Zahn mit einem weiteren Kommentar 36 versehen werden, wobei anschließend ein einzusetzendes Implantat 37, ein einzusetzendes Abutment 38 und ein einzusetzendes Zahnersatzteil 39 geplant werden. Dabei werden die entsprechenden Modelle 23, 24 und 25 in ihren Abmessungen und Orientierungen an die Zahnsituation angepasst.

Der Vorteil dieses Verfahrens besteht also darin, dass die Analyse der Befunde und die Planung einer Behandlung unmittelbar während der Videoaufnahme erfolgen können. Dies verkürzt die Behandlungszeit und erleichtert die Orientierung für den behandelnden Zahnarzt.

Die Planungselemente 20 können alternativ oder ergänzend zur Darstellung mittels des Monitors 8 auch mittels des Projektors 16 auf die Hautoberfläche 3 projiziert werden.

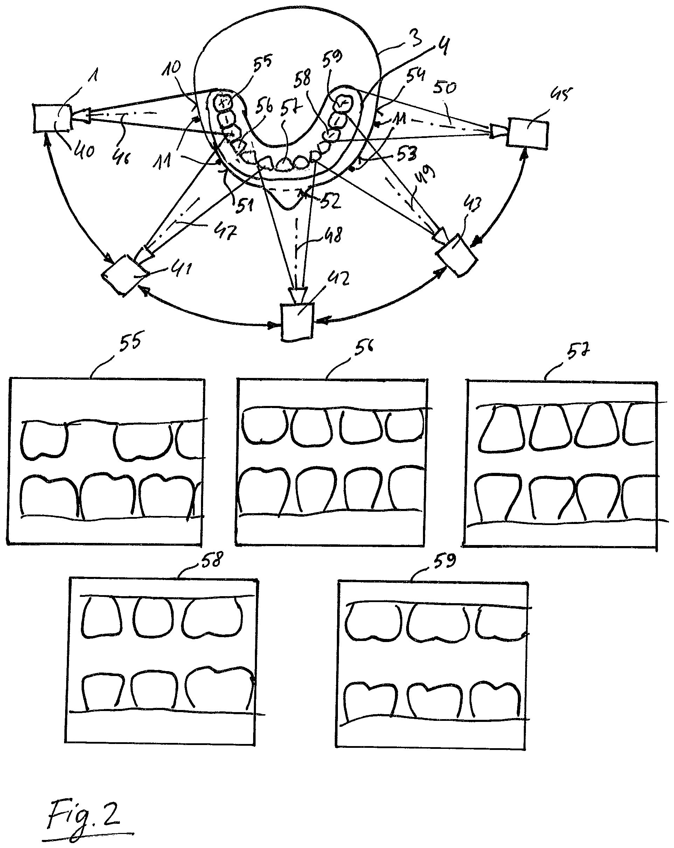

Die Fig. 2 zeigt eine Skizze zur Verdeutlichung der Videoaufnahme aus verschiedenen Aufnahmerichtungen. Die Videokamera 1 wird um das Objekt 3 bewegt und dabei an einer ersten Position 40, an einer zweiten Position 41, an einer dritten Position 42, an einer vierten Position 43 und an einer fünften Position 45 positioniert. Dabei erzeugt die Videokamera 1 die Videoaufnahme aus einer ersten Aufnahmerichtung 46, aus einer zweiten Aufnahmerichtung 47, aus einer dritten Aufnahmerichtung 48, aus einer vierten Aufnahmerichtung 49 und aus einer fünften Aufnahmerichtung 50 des Objekts 3. Dabei werden ein erster Ausschnitt 10, ein zweiter Ausschnitt 51, ein dritter Ausschnitt 52, ein vierter Ausschnitt 53 und ein fünfter Ausschnitt 54 der Hautoberfläche des Patienten 3 aufgenommen. Anhand der auf dem Patienten 3 angeordneten Markierungen 11 kann dann die Positionierung der Videokamera 1 relativ zum Patienten 3 bestimmt werden. Daraufhin wird, wie in Fig. 1 erläutert, der passende Ausschnitt des Patientenmodells 4, sowie die Röntgendaten, mittels des Monitors 8 angezeigt. Im vorliegenden Fall wird bei der ersten Position 40 der Videokamera 1 ein erster Ausschnitt 55, bei der zweiten Position 41 ein zweiter Ausschnitt 56, bei der dritten Position 42 ein dritter Ausschnitt 57, bei der vierten Position 43 ein vierter Ausschnitt 58 und bei der fünften Position 45 ein fünfter Ausschnitt 59 des Patientenmodells 4 angezeigt.

### Bezugszeichen

- 1: Videokamera
- 2: Handstück
- 3: Objekt/Kopf
- 4: Patientenmodell
- 5: Computer
- 6: Kabelverbindung
- 7: Bewegungsbahn
- 8: Monitor
- 9: Aufnahmerichtung
- 10: erster Ausschnitt des Objekts
- 11: Markierung
- 12: zweiter Ausschnitt des Patientenmodells
- 13: Blickrichtung auf das Patientenmodell
- 14: Kinn
- 15: Kieferknochenwinkel
- 16: Projektor
- 17: Marker/Laserpointer
- 18: optischer Zeiger/Laserpunkt
- 19: Taste
- 20: Planungselement
- 21: Kommentar
- 22: Markierung
- 23: Implantat
- 24: Zahnersatzteil
- 25: Abutment
- 26: Tastatur
- 27: Maus
- 28: Cursor
- 30: Markierung
- 31: Kommentar
- 32: zweiter Befund
- 34: Kommentar
- 35: Bereich
- 36: Kommentar
- 37: Implantat
- 38: Abutment
- 39: Zahnersatzteil
- 40: erste Position
- 41: zweite Position
- 42: dritte Position
- 43: vierte Position
- 45: fünfte Position
- 46: erste Aufnahmerichtung
- 47: zweite Aufnahmerichtung
- 48: dritte Aufnahmerichtung
- 49: vierte Aufnahmerichtung
- 50: fünfte Aufnahmerichtung
- 51: zweiter Ausschnitt des Objekts
- 52: dritter Ausschnitt des Objekts
- 53: vierter Ausschnitt des Objekts
- 54: fünfter Ausschnitt des Objekts
- 56: zweiter Ausschnitt des Patientenmodells
- 57: dritter Ausschnitt des Patientenmodells
- 58: vierter Ausschnitt des Patientenmodells
- 59: fünfter Ausschnitt des Patientenmodells

## Patentansprüche

1. Verfahren zur Planung oder zur Überprüfung der Planung einer dentalen und/oder einer maxillofazialen Behandlung, wobei mittels mindestens einer Videokamera (1) eine Videoaufnahme von einem Objekt (3) aufgenommen wird, wobei ein Patientenmodell (4) vorhanden ist, das Bilddaten des Objekts (3) umfasst, **dadurch gekennzeichnet, dass** die Videoaufnahme an das Patientenmodell (4) virtuell so gekoppelt wird, dass beim Bewegen der Videokamera (1) relativ zum Objekt (3) eine Blickrichtung (13) der Ansicht auf das Patientenmodell (4) abhängig von einer sich ändernden Aufnahmerichtung (9, 46, 47, 48, 49, 50) der Videoaufnahme verändert wird, wobei ein darzustellender Ausschnitt des Patientenmodells durch einen Abstand und durch die Aufnahmerichtung (9, 46, 47, 48, 49, 50) der Videokamera (1) relativ zum Objekt (3) definiert wird.

2. Verfahren nach Anspruch 1, **dadurch gekennzeichnet, dass** das Patientenmodell (4) dreidimensionale optische Oberflächendaten, dreidimensionale Röntgendaten, virtuelle Planungsdaten und/oder MRT-Bilddaten zumindest eines Teils des Objekts (3) umfasst.

3. Verfahren nach Anspruch 1 oder 2, **dadurch gekennzeichnet, dass** die Videoaufnahme in Überlagerung mit dem Patientenmodell (4) mittels mindestens einer Anzeigevorrichtung (8) angezeigt wird.

4. Verfahren nach einem der Ansprüche 1 bis 3, **dadurch gekennzeichnet, dass** die virtuelle Kopplung der Videoaufnahme an das Patientenmodell (4) unter Verwendung von Mustererkennungsalgorithmen erfolgt, wobei Markierungen (11, 22, 30), die am Objekt (3) angebracht werden, oder charakteristische Strukturen des Objekts (3), wie Augen, Nase, Mund oder Zähne des Patienten, sowohl in der Videoaufnahme als auch im Patientenmodell (4) erkannt werden.

5. Verfahren nach Anspruch 4, **dadurch gekennzeichnet, dass** die Bestimmung der sich ändernden Aufnahmerichtung (9) der Videokamera (1) relativ zum Objekt (3) automatisch computergestützt durch Verfolgung der am Objekt (3) angebrachten Markierungen (11, 22, 30) oder von charakteristischen Strukturen des Objekts (3), wie Augen, Nase, Mund oder Zähne des Patienten, erfolgt.

6. Verfahren nach einem der Ansprüche 1 bis 5, **dadurch gekennzeichnet, dass** die Planung unmittelbar während der Videoaufnahme erfolgt, wobei Planungselemente (20, 36, 37, 38, 39) in Überlagerung mit dem Patientenmodell (4) mittels einer Anzeigevorrichtung (8) angezeigt werden und dabei durch den Benutzer deren Position relativ zum Patientenmodell (4) festgelegt wird.

7. Verfahren nach Anspruch 6, **dadurch gekennzeichnet, dass** die Planungselemente (20) virtuelle Markierungen (30), Kommentare (31, 34, 36), einfache Zeichnungen oder Modelle von einzusetzenden Zahnersatzteilen (39) bzw. Implantaten (37) sind, deren Position relativ zum Patientenmodell (4) festgelegt wird.

8. Verfahren nach Anspruch 6 oder 7, **dadurch gekennzeichnet, dass** die Planungselemente (20) direkt auf das zu behandelnde Objekt (3) mittels eines Projektors (16) projiziert werden.

9. Verfahren nach einem der Ansprüche 1 bis 8, **dadurch gekennzeichnet, dass** die Planung mittels eines Markers (17) erfolgt, wobei ein optischer Zeiger (18) auf den Patienten projiziert wird, der während der Videoaufnahme mittels der Videokamera (1) erfasst wird.

10. Verfahren nach Anspruch 9, **dadurch gekennzeichnet, dass** der Marker (17) ein Laserpointer ist, der einen Laserpunkt auf das Objekt (3) projiziert.

11. Verfahren nach einem der Ansprüche 1 bis 8, **dadurch gekennzeichnet, dass** die Planung mittels eines optisch erkennbaren Markers erfolgt, der während der Videoaufnahme mittels der Videokamera (1) erfasst wird.

12. Verfahren nach Anspruch 11, **dadurch gekennzeichnet, dass** der optisch erkennbare Marker ein Stift mit einer farblichen Spitze, ein Finger oder ein zahnärztliches Instrument ist.

13. Verfahren nach einem der Ansprüche 6 bis 12, **dadurch gekennzeichnet, dass** die auf das Objekt (3) projizierten Planungselemente (20) mittels des Markers (17) ausgewählt und verschoben werden, um deren Position relativ zum Patientenmodell (4) festzulegen.

14. Verfahren nach Anspruch 13, **dadurch gekennzeichnet, dass** die Auswahl eines der Planungselemente (20) dadurch erfolgt, dass der Benutzer einen Schalter (19) am Marker (17) betätigt und dadurch eine bestimmte Struktur auf die Oberfläche des zu behandelnden Objekts (3) projiziert wird, wobei diese Struktur in der Videoaufnahme erkennbar ist.

15. Verfahren nach einem der Ansprüche 2 bis 14, **dadurch gekennzeichnet, dass** zur Erleichterung der Planung die Bilddaten und/oder die virtuellen Planungsdaten des Patientenmodells (4) mittels eines Projektors (16) auf das zu behandelnde Objekt (3) projiziert werden.

## Claims

1. Method for planning or checking the planning of a dental and/or a maxillofacial treatment, wherein a video recording of an object (3) is recorded by means of at least one video camera (1), wherein a patient model (4) is provided, which includes image data of the object (3), **characterized in that** the video recording is virtually coupled to the patient model (4) in such a way that, when moving the video camera (1) in relation to the object (3), a line of sight (13) of the view onto the patient model (4) is changed as a function of a changing recording direction (9, 46, 47, 48, 49, 50) of the video recording, wherein a detail of the patient model to be displayed is defined by a distance and by the recording direction (9, 46, 47, 48, 49, 50) of the video camera (1) relative to the object (3).

2. Method according to Claim 1, **characterized in that** the patient model (4) comprises three-dimensional optical surface data, three-dimensional X-ray data, virtual planning data and/or MRI image data of at least part of the object (3).

3. Method according to Claim 1 or 2, **characterized in that** the video recording is displayed in superimposition with the patient model (4) by means of at least one display device (8).

4. Method according to any of Claims 1 to 3, **characterized in that** the virtual coupling of the video recording to the patient model (4) is performed with the aid of pattern recognition algorithms, wherein markers (11, 22, 30) attached to the object (3) or characteristic structures of the object (3), such as the eyes, nose, mouth or teeth of the patient, are identified in both the video recording and the patient model (4).

5. Method according to Claim 4, **characterized in that** the determination of the changing recording direction (9) of the video camera (1) relative to the object (3) takes place automatically and in a computer-aided manner by tracking the markers (11, 22, 30) attached to the object (3) or the characteristic structures of the object (3), such as the eyes, nose, mouth or teeth of the patient.

6. Method according to any of Claims 1 to 5, **characterized in that** the planning takes place directly during the video recording, wherein planning elements (20, 36, 37, 38, 39) are displayed in superimposition with the patient model (4) by means of a display device (8), and the position of said planning elements relative to the patient model (4) is defined by the user.

7. Method according to Claim 6, **characterized in that** the planning elements (20) are virtual markers (30), comments (31, 34, 36), simple drawings or models of dental prosthesis parts (39) or implants (37) to be placed, the position of which relative to the patient model (4) is defined.

8. Method according to Claim 6 or 7, **characterized in that** the planning elements (20) are projected directly onto the object (3) to be treated by means of a projector (16) .

9. Method according to any of Claims 1 to 8, **characterized in that** the planning is carried out with the aid of a marker (17), wherein an optical pointer (18) acquired during the video recording by means of the video camera (1) is projected onto the patient.

10. Method according to Claim 9, **characterized in that** the marker (17) is a laser pointer which projects a laser dot onto the object (3).

11. Method according to any of Claims 1 to 8, **characterized in that** the planning is carried out with the aid of an optically identifiable marker, which is acquired during the video recording by means of the video camera (1).

12. Method according to Claim 11, **characterized in that** the optically identifiable marker is a pencil with a colored tip, a finger or a dental instrument.

13. Method according to any of Claims 6 to 12, **characterized in that** the planning elements (20) projected onto the object (3) are selected and moved by means of the marker (17) in order to define their position relative to the patient model (4).

14. Method according to Claim 13, **characterized in that** the selection of one of the planning elements (20) takes place via the actuation of a switch (19) on the marker (17) by the user, thereby projecting a specific structure onto the surface of the object (3) to be treated, wherein said structure can be identified in the video recording.

15. Method according to any of Claims 2 to 14, **characterized in that**, in order to facilitate the planning, the image data and/or the virtual planning data of the patient model (4) is projected onto the object (3) to be treated by means of a projector (16).

## Revendications

1. Procédé de planification ou de vérification de la planification d'un traitement dentaire et/ou maxillofacial, dans lequel une prise de vue vidéo d'un objet (3) est réalisée au moyen d'au moins une caméra vidéo (1) et dans lequel est présent un modèle patient (4) contenant des données d'image de l'objet (3), **caractérisé en ce que** la prise de vue vidéo est couplée virtuellement au modèle patient (4) de façon à modifier une direction de visualisation (13) de la vue sur le modèle patient (4) lorsque la caméra vidéo (1) se déplace par rapport à l'objet (3), en fonction d'une direction de prise de vue variable (9, 46, 47, 48, 49, 50) de prise de vue vidéo, une section à représenter du modèle patient étant définie par une distance et par la direction de prise de vue (9, 46, 47, 48, 49, 50) de la caméra vidéo (1) par rapport à l'objet (3).

2. Procédé selon la revendication 1, **caractérisé en ce que** le modèle patient (4) comprend des données de surface tridimensionnelles optiques, des données radiographiques tridimensionnelles, des données de planification virtuelle et/ou des données d'image IRM d'au moins une partie de l'objet (3).

3. Procédé selon la revendication 1 ou 2, **caractérisé en ce que** la prise de vue vidéo est affichée en superposition du modèle patient (4) au moyen d'au moins un dispositif d'affichage (8).

4. Procédé selon une des revendications 1 à 3, **caractérisé en ce que** le couplage virtuel de la prise de vue vidéo avec le modèle patient (4) est réalisé par l'utilisation d'algorithmes de reconnaissance de motif ; des repères (11, 22, 30) appliqués sur l'objet (3) ou bien des structures caractéristiques de l'objet (3) telles que les yeux, le nez, la bouche ou les dents du patient étant reconnus dans la prise de vue vidéo ainsi que dans le modèle patient (4).

5. Procédé selon la revendication 4, **caractérisé en ce que** la détermination de la direction de prise de vue variable (9) de la caméra vidéo (1) par rapport à l'objet (3) s'effectue automatiquement de manière informatisée par suivi des repères (11, 22, 30) appliqués sur l'objet (3) ou des structures caractéristiques de l'objet (3) telles que les yeux, le nez, la bouche ou les dents du patient.

6. Procédé selon une des revendications 1 à 5, **caractérisé en ce que** la planification s'effectue directement au cours de la prise de vue vidéo ; des éléments de planification (20, 36, 37, 38, 39) étant affichés en superposition du modèle patient (4) au moyen d'un dispositif d'affichage (8) et leur position par rapport au modèle patient (4) étant alors établie par l'utilisateur.

7. Procédé selon la revendication 6, **caractérisé en ce que** les éléments de planification (20) sont des repères virtuels (30), des commentaires (31, 34, 36), des dessins ou modèles simples de prothèses dentaires (39) ou d'implants (37) dont la position par rapport au modèle patient (4) est établie.

8. Procédé selon la revendication 6 ou 7, **caractérisé en ce que** les éléments de planification (20) sont projetés directement sur l'objet (3) à traiter au moyen d'un projecteur (16).

9. Procédé selon une des revendications 1 à 8, **caractérisé en ce que** la planification est effectuée au moyen d'un marqueur (17), un pointeur optique (18) étant projeté sur le patient et étant détecté pendant la prise de vue vidéo au moyen de la caméra vidéo (1).

10. Procédé selon la revendication 9, **caractérisé en ce que** le marqueur (17) est un pointeur laser qui projette un point laser sur l'objet (3).

11. Procédé selon une des revendications 1 à 8, **caractérisé en ce que** la planification s'effectue au moyen d'un marqueur pouvant être reconnu par voie optique et qui est détecté pendant la prise de vue vidéo au moyen de la caméra vidéo (1).

12. Procédé selon la revendication 11, **caractérisé en ce que** le marqueur pouvant être reconnu par voie optique est un stylo à pointe colorée, un doigt ou un instrument de médecine dentaire.

13. Procédé selon une des revendications 6 à 12, **caractérisé en ce que** les éléments de planification (20) projetés sur l'objet (3) sont choisis et déplacés au moyen du marqueur (17) afin d'établir leur position par rapport au modèle patient (4).

14. Procédé selon la revendication 13, **caractérisé en ce que** la sélection d'un des éléments de planification (20) s'effectue **en ce que** l'utilisateur actionne un commutateur (19) sur le marqueur (17) et permet ainsi de projeter une structure définie sur la surface de l'objet (3) à traiter, cette structure pouvant être reconnue dans la prise de vue vidéo.

15. Procédé selon une des revendications 2 à 14, **caractérisé en ce que**, pour faciliter la planification, les données d'image et/ou les données de planification virtuelles du modèle patient (4) sont projetées sur l'objet (3) à traiter au moyen d'un projecteur (16).
